# EUROPEAN PATENT SPECIFICATION

(11) **EP 4 258 716 B1**
(45) Date of publication and mention of the grant of the patent: **15.07.2026**
(21) Application number: 22214898.3
(22) Date of filing: 20.12.2022
(51) Int. Cl.: H04W 12/02, H04W 88/06, H04W 84/12, H04L 9/40, H04L 69/22

(54) **MAPPING MECHANISM TO ENHANCE POST ASSOCIATION PRIVACY**
ABBILDUNGSMECHANISMUS ZUR VERBESSERUNG DER POSTASSOZIATIONSPRIVATSPHÄRE
MÉCANISME DE MAPPAGE POUR AMÉLIORER LA CONFIDENTIALITÉ APRÈS ASSOCIATION

(30) Priority: 08.04.2022 US 202263328961 P
(43) Date of publication of application: 11.10.2023
(73) Proprietor: INTEL Corporation, Santa Clara, CA 95054 (US)
(72) Inventor: HUANG, Po-Kai, San Jose CA, 95131 (US); BRAVO, Daniel, Portland OR, 97229 (US); BERG, Johannes, 32760 Detmold NW (DE); ALEXANDER, Danny, Neve Efraim Monoson (IL); PEER, Ilan, 71721 Modiin JM (IL); OUZIELI, Ido, 6382732 Tel Aviv TA (IL)
(74) Representative: Viering, Jentschura & Partner mbB Patent- und Rechtsanwälte

(56) References cited:
- WO-A1-2009/011659
- US-A1- 2016 135 041

## Description

### TECHNICAL FIELD

This disclosure generally relates to systems and methods for wireless communications and, more particularly, to mapping mechanism to enhance post association privacy.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

WO2009011659A1 describes a method of protocol remapping including receiving a data packet destined for an external network and remapping selected control information in the protocol header such as TCP sequence number. A data packet with the remapped protocol header is then transmitted to the external network instead of the received data packet. A method of detecting possible attacks on a network is also disclosed.

### BRIEF DESCRIPTION OF THE DRAWINGS

FIG. 1 is a network diagram illustrating an example network environment for mapping mechanism, in accordance with one or more example embodiments of the present disclosure.
FIG. 2 illustrates a flow diagram of illustrative process for an illustrative mapping mechanism system, in accordance with one or more example embodiments of the present disclosure.
FIG. 3 illustrates a functional diagram of an exemplary communication station that may be suitable for use as a user device, in accordance with one or more example embodiments of the present disclosure.
FIG. 4 illustrates a block diagram of an example machine upon which any of one or more techniques (e.g., methods) may be performed, in accordance with one or more example embodiments of the present disclosure.
FIG. 5 is a block diagram of a radio architecture in accordance with some examples.
FIG. 6 illustrates an example front-end module circuitry for use in the radio architecture of FIG. 5, in accordance with one or more example embodiments of the present disclosure.
FIG. 7 illustrates an example radio IC circuitry for use in the radio architecture of FIG. 5, in accordance with one or more example embodiments of the present disclosure.
FIG. 8 illustrates an example baseband processing circuitry for use in the radio architecture of FIG. 5, in accordance with one or more example embodiments of the present disclosure.
FIGS. 9A and 9B are network diagrams illustrating examples of a network environment for a mapping mechanism to enhance post association privacy, in accordance with one or more example embodiments of the present disclosure.
FIG. 10 is a block diagram illustrating an example of an expanded CCMP MPDU, according to some example embodiments of the present disclosure.
FIG. 11 is a block diagram illustrating an example of an expanded GCMP MPDU, according to some example embodiments of the present disclosure.
FIG. 12 is a block diagram illustrating an example of a reception transient period and a transmission transient period, according to some example embodiments of the present disclosure within the scope of the claims.
FIG. 13 is a block diagram illustrating an example of the mappings used during the transient period, according to some example embodiments of the present disclosure within the scope of the claims.
FIG. 14 is a block diagram illustrating an example of a permutation mapping, according to some example embodiments of the present disclosure.

### DETAILED DESCRIPTION

The invention is defined by the scope of the claims. Advantageous embodiments are subject of the dependent claims.

The following description and the drawings sufficiently illustrate specific embodiments to enable those skilled in the art to practice them.

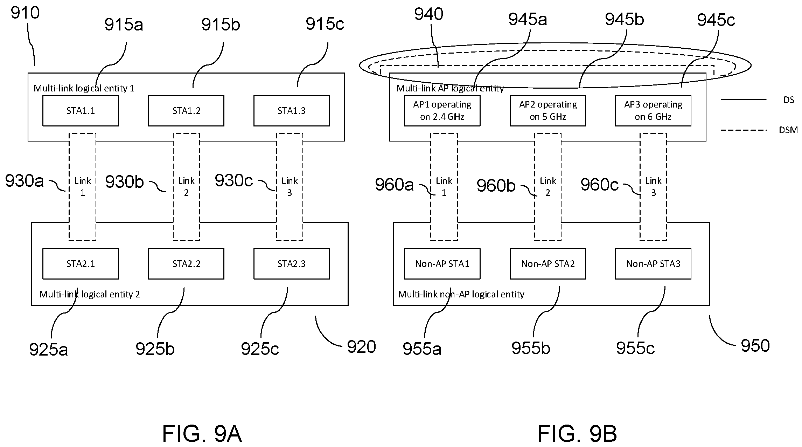

FIGS. 9A and 9B are network diagrams illustrating examples of a network environment for a mapping mechanism to enhance post association privacy, in accordance with one or more example embodiments of the present disclosure. In general, there are two multi-link devices or logical entities on either side (e.g., uplink/downlink or sender/receiver) of a communication connection, each of which includes multiple stations (STAs) that can setup one or more physical links with each other to form the communication connection. The detailed definition is shown below.

A multi-link device is a logical entity that contains one or more STAs. The logical entity has one MAC data service interface and primitives to the LLC and a single address associated with the interface, which can be used to communicate on the DSM.

For example, referring to FIG. 9A, a first multi-link logical entity 910 includes a first STA 915a (e.g., STA1.1), a second STA 915b (e.g., STA1.2), and a third STA 915c (e.g., STA1.3) and a second multi-link logical entity 920 includes a first STA 925a (e.g., STA2.1), a second STA 925b (e.g., STA2.2), and a third STA 925c (e.g., STA2.3). Each STA 915 of the first multi-link logical entity 910 and each respective STA 925 of the second multi-link logical entity 920 may form a respective link 930 with each other. For example, the first STA 915a of the first multi-link logical entity 910 and the first STA 925a of the second multi-link logical entity 920 may form a link 930a with each other.

A multi-link device allows STAs within the multi-link device to have the same MAC address.

The name of the multi-link device can be changed.

For infrastructure framework, there is a multi-link AP logical entity, which includes AP STAs on one side of a communication connection, and a multi-link non-AP logical entity, which includes non-AP STAs on the other side of the communication. The detailed definition is shown below.

A multi-link AP device (AP MLD) is a multi-link device or multi-link logical entity, where each STA within the Multi-link device/logical entity is an EHT AP.

A multi-link non-AP device (non-AP MLD) is a multi-link device or multi-link logical entity, where each STA within the multi-link device/logical entity is a non-AP EHT STA.

For example, referring to FIG. 9B, a multi-link AP logical entity 940 includes a first EHT AP STA 945a (e.g., AP1 operating on 2.4 GHz), a second EHT AP STA 945b (e.g., AP2 operating on 5 GHz), and a third EHT AP STA 945c (e.g., AP3 operating on 6 GHz) and a multi-link non-AP logical entity 950 includes a first non-AP STA 955a (e.g., non-AP STA1), a second non-AP STA 955b (e.g., non-AP STA2), and a third non-AP STA 955c (e.g., non-AP STA3). Each AP STA 945 of the multi-link AP logical entity 940 and each respective non-AP STA 955 of the multi-link non-AP logical entity 950 may form a respective link 960 with each other. For example, the first AP STA 945a of the multi-link AP logical entity 940 and the first non-AP STA 955a of the multi-link non-AP logical entity 950 may form a link 960a with each other.

This framework is a natural extension from the one link operation between two STAs, which are AP and non-AP STA under infrastructure framework. The present disclosure provides ways to enhance post association privacy of the non-AP STAs of the non-AP MLD and APs of the AP MLD.

Today when an association is established between a non-AP MLD and an AP MLD or between a non-AP STA and an AP, the MAC address of the affiliated non-AP STAs of the non-AP MLD or the non-AP STA does not change its MAC address. The MAC address of the affiliated non-AP STAs of the non-AP MLD or the non-AP STA needs to change to provide privacy. However, this change requires many other parameters to also change because they can also be used for tracking.

For example, the sequence number (SN) in the frame needs to be changed. Otherwise, it is a source of information that can be used to track since it can be non-AP MLD or non-AP STA specific.

The packet number (PN) in the frame needs to be changed. Otherwise, it is a source of information that can be used to track since it can be non-AP MLD or non-AP STA specific.

The traffic identifier (TID) in the frame needs to be changed. Otherwise, it is a source of information that can be used to track since it can be non-AP MLD or non-AP STA specific.

The association identifier (AID) in certain frames needs to be changed. Otherwise, it is a source of information that can be used to track since it can be non-AP MLD or non-AP STA specific.

Beyond the change of various parameters, there are two additional issues that need to be resolved to address the post association privacy concern.

If only one associated non-AP MLD changes the MAC address of affiliated non-AP STAs or only one associated non-AP STA changes the MAC address, then that non-AP MLD or non-AP STA can still be tracked since attacker can just observe all the traffic and connect the traffic between a MAC address that disappears and another MAC address that just appears.

During the change of parameters, there may be implementation concern to change certain parameters instantaneously. For example, there can be existing frames in the queue that already has assigned parameters like MAC address, SN, PN, and TID due to say retransmission. Changing the parameters of those frames instantaneously is considered a significant task.

Prior solutions include changing the MAC address instantaneously or allowing a period to allow both old MAC address and new MAC address.

Prior solutions also include changing the MAC address for affiliated non-AP STAs of multiple non-AP MLD or multiple non-AP STAs.

The prior proposed solutions only consider the MAC address change and does not consider changing the TID, AID, SN, PN, which needs to be addressed together to enhance post association privacy. Specifically, how to handle instantaneous change of TID, SN, PN for all the associated non-AP MLD or associated non-AP STA that have the capability. This may require significant implementation changes for AP MLD or AP.

For example, prior solutions for changing the MAC address would not teach how to handle two versions of TID, SN, PN for each associated non-AP MLD or each associated non-AP STA that have the capability. Today, received frames go through reordering based on TID, SN, and PN. If two versions of TID, SN, and PN are used simultaneously, then it is impossible to handle reordering.

Example embodiments of the present disclosure relate to systems, methods, and devices for mapping mechanism to enhance post association privacy.

Due to the potential amount of computation that an AP or AP MLD may need to handle (e.g., process) for the changing of all the parameters, methods are proposed to handle MAC address, AID, TID, SN, PN change with a transient period where old value and new value can both be processed.

The present disclosure introduces a mechanism for mapping, where it can have mapping for the following:

The actual MAC address maps to on the air MAC address.

The actual TID maps to on the air TID. This includes TIDs for Downlink (DL) data frame, which is from an AP or AP MLD to a client and TIDs for Uplink (UL) data frame, which is from a client to an AP or AP MLD.

The actual SN maps to on the air SN. This includes the mapping for each SN space for DL data of a TID, DL management frame, UL data of a TID, and UL management frame. This includes the mapping for the interpretation of a block acknowledge (BA) bitmap by mapping the indication of a SN properly.

The actual block acknowledgement (BA) bitmap. This includes the mapping for each BA bitmap length for DL and UL data.

The actual PN maps to on the air PN. This includes one mapping for PN space for DL and one mapping for PN space for UL.

The actual AID maps to on the air AID.

Combined with the transient period idea above, for each mapping, two mappings (old (e.g., actual) mapping and new mapping (e.g., air)) will be handled during the transient period.

Additionally, a time is defined where transmitter stops using the old mapping before the end of the transient period.

The difficulty of implementation consideration to handle instantaneous change is relieved by handling two mappings during the transient period.

Implementation considerations like encryption, decryption, channel access of TID, reordering, and collision of AID are taken care of.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

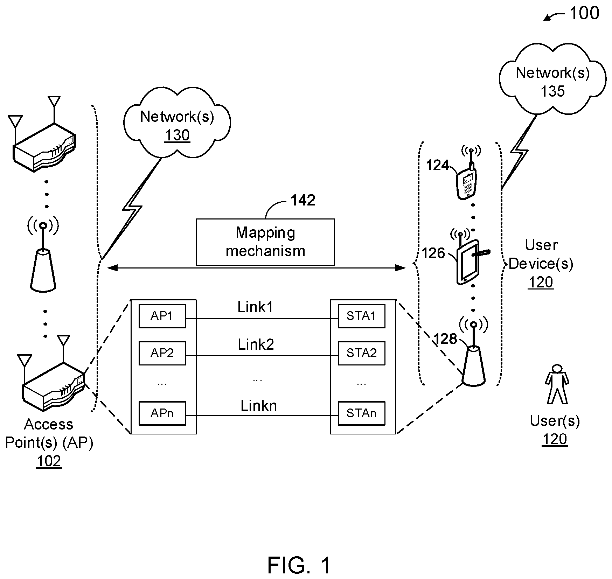

FIG. 1 is a network diagram illustrating an example network environment of mapping mechanism, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

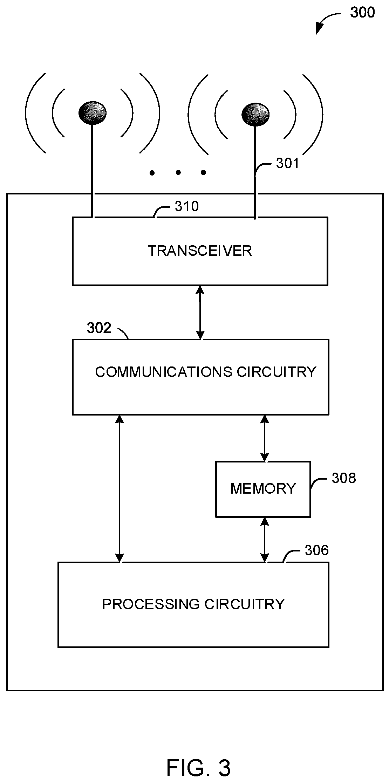

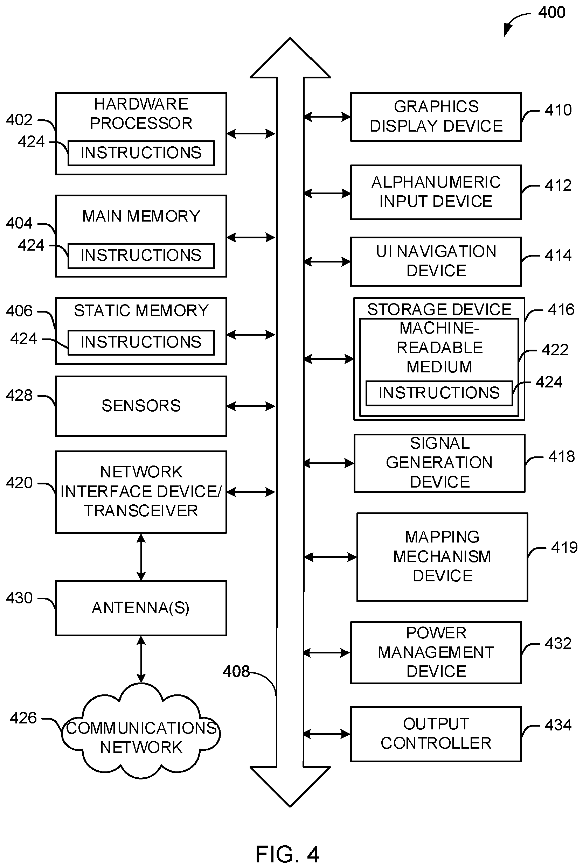

In some embodiments, the user devices 120 and the AP 102 may include one or more computer systems similar to that of the functional diagram of FIG. 3 and/or the example machine/system of FIG. 4.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any object (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a mapping mechanism 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for purposes of illustration and are not meant to be limiting.

In one or more embodiments, a mapping mechanism system may facilitate enhanced post association privacy.

While pursing the endless quest of achieving high throughput, 802.11be created a framework to allow connection of multiple links while connecting to a network as shown in FIGS. 9A and 9B.

There are two multi-link devices on either side which includes multiple STAs that can setup link with each other.

Multi-link device (MLD): A logical entity that contains one or more STAs. The logical entity has one MAC data service interface and primitives to the logical link control (LLC) layer and a single address associated with the interface, which can be used to communicate on the DSM.

A Multi-link device allows STAs within the multi-link logical entity to have the same MAC address. The exact name can be changed.

For infrastructure framework, there is a Multi-link AP device, which includes APs on one side, and Multi-link non-AP device, which includes non-APs on the other side. The detailed definition is shown below.

Multi-link AP device: A multi-link device, where each STA within the multi-link device is an EHT AP.

Multi-link non-AP device: A multi-link device, where each STA within the multi-link device is a non-AP EHT STA.

This framework is a natural extension from the one link operation between two STAs, which are AP and non-AP STA under infrastructure framework.

In one or more embodiments, within the scope of the claims, a system introduces the concept of mapping that maps the actual parameters to the on the air parameters during transmission and mapping the on the air parameters back to the actual parameters during reception.

Consider the following parameters for an on the air individually addressed frame:
- a MAC address for a non-AP STA, which can be affiliated with a non-AP MLD or not affiliated with a non-AP MLD. For the downlink transmission, this is the address in A1 (RA). For the uplink transmission, this is the address in A2 (TA).
- DL Traffic identifiers (TID) for individually addressed frame.
- UL Traffic identifiers (TID) for individually addressed frame. TID is included in QoS control field of the data frame.
- a Sequence number (SN) in each SN space for individually addressed frame. There is one SN space for each TID of DL individually addressed frame. There is one SN space for each TID of UL individually addressed frame. There is one SN space for DL individually addressed management frame between AP MLD and non-AP MLD. There is one SN space for UL individually addressed management frame between AP MLD and non-AP MLD. Create one SN space for DL individually addressed management frame between AP and non-AP STA that is not affiliated with a non-AP MLD. Create one SN space for UL individually addressed management frame between AP and non-AP STA that is not affiliated with a non-AP MLD. The SN is included in a Sequence Control field of the data frame or management frame. The SN is also included in the BAR frame, MU-BAR frame, BA frame, and multi-STA BA frame in the form of starting sequence number (SSN).
- a Block Ack (BA) bitmap in the BA frame including all BlockAck variants. This includes different BA length acknowledges DL data frame (BA sending by the non-AP STA or non-AP MLD) like 32, 64, 256, 512, or 1024. This includes different BA length acknowledges UL data frame (BA sending by the AP or AP MLD) like 64, 256, 512, or 1024.
- a Packet number (PN) in each PN space for individually addressed frames. This is the number used by TK under encryption to avoid replay attack. There is one PN space for DL individually addressed frame. There is one PN space for UL individually addressed frame.

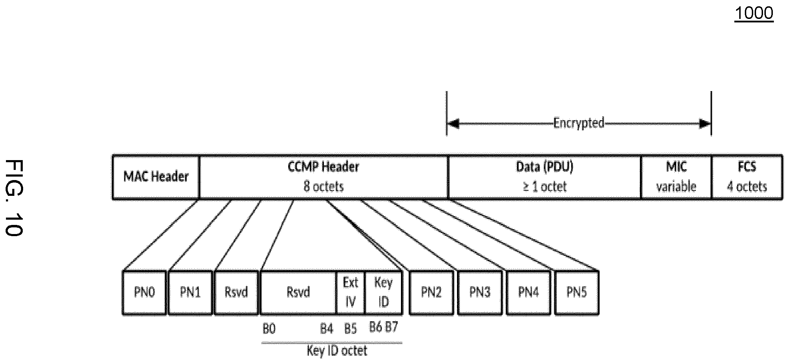

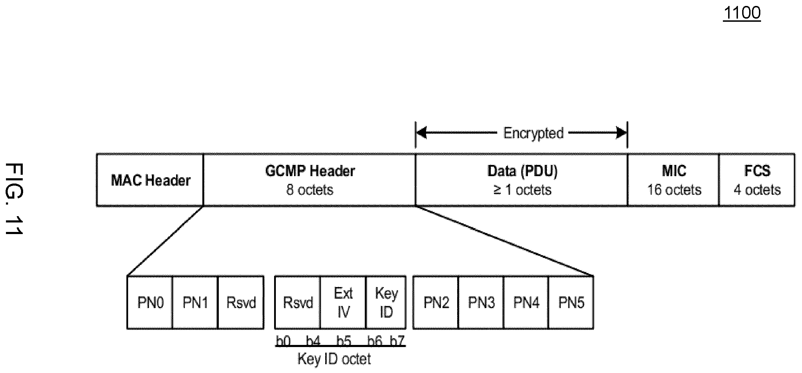

For example, consider PN0 to PN 5 below in a Media Access Control Protocol Data Unit (MPDU) encrypted using a Counter Mode Cipher Block Chaining Message Authentication Code Protocol (CCMP) or Galois/Counter Mode CMP (GCMP). FIG. 10 is a block diagram illustrating an example of an expanded CCMP MPDU, according to some example embodiments of the present disclosure. FIG. 11 is a block diagram illustrating an example of an expanded GCMP MPDU, according to some example embodiments of the present disclosure.

STA_ID in the high efficiency (HE) physical layer protocol data unit (PPDU) PHY header or EHT PPDU PHY header.

STA_ID is set to 11 LSB of the AID. Hence, STA_ID parameters will be addressed if AID issue is addressed. In HE MU PPDU a list of STA_ID is provided to determine the corresponding RU to receive the PSDU. In EHT MU PPDU, the setting is as follows.

For an individually addressed resource unit (RU) that is addressed to an associated non-AP STA the parameter STA_ID shall be set to 11 LSBs of the AID of the STA receiving the presentation layer service data unit (PSDU) contained in that RU. If an RU is intended for an AP (i.e., the TXVECTOR parameter UPLINK_FLAG is 1), then the parameter STA_ID shall contain only one element that is set to the 11 LSBs of the AID of the non-AP STA transmitting the PPDU.

The proposed mapping procedure during transmission is the following:

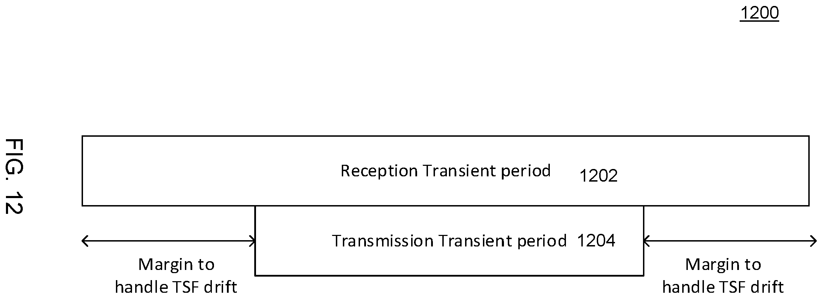

FIG. 12 is a block diagram illustrating an example of a temporal relationship between a reception transient period and a transmission transient period, according to some example embodiments of the present disclosure within the scope of the claims.
- Define a transient period 1202 for reception of frame. The reception transient period 1202 can start during a specific periodic time (e.g., a periodicity of the reception transient period for repeating transient periods when mappings are changed) announced by the AP or AP MLD during association. The start time of the transient period for the reception of frames should be earlier than the start time of the transient period for the transmission of frames. The reception period can start by a frame sent by the AP or AP MLD after association. The reception period can end after a fixed amount of time announced by the AP or AP MLD during association. The end time of the transient period for the reception of frames should be later than the end time of the transient period for the transmission of frames. The reception period can end after a fixed amount of time defined in the 802.11 specification.
- Define a transient period 1204 for transmission of frame. The transmission transient period 1204 can start during a specific periodic time (e.g., a periodicity of the transmission transient period for repeating transient periods when mappings are changed) announced by the AP or AP MLD during association. The transmission transient period can start after some fixed time announced by the AP or AP MLD during association after the start time of the transient period for the reception of frames. The transmission transient period can end after a fixed amount of time announced by the AP or AP MLD during association. The transmission transient period can end after a fixed amount of time defined in the 802.11 specification. The transmission transient period can end with some fixed time announced by the AP or AP MLD during association before the end time of the transient period of reception of frame.

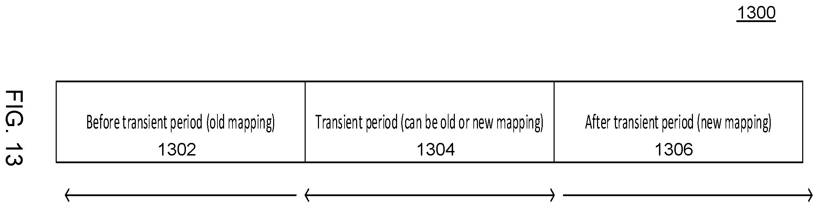

FIG. 13 is a block diagram illustrating an example of the mappings used before, during, and after a transient period, according to some example embodiments of the present disclosure within the scope of the claims. An example of the transient period for transmission and reception is as follows:

For each mapping of a parameter, having two mappings (old mapping and new mapping) to handle the transient period for transmission and/or reception of a frame between the old mapping and the new mapping.

Referring to FIG. 13, consider old mappings at a time 1302 (before transient period 1304) and new mappings at a time 1306 (after transient period 1304).

For each mapping of a parameter, the transmission procedure is as follows:
- Prepare the frame using actual parameters including MAC address, AID, TID, SN, SSN, PN, BA bitmap.
- Determining the channel access based on the actual parameters, i.e., TID.
- Determining encryption (if needed) based on actual parameters.
- For the frame/PPDU sending to the air, swap the actual parameters to mapped parameters for the on the air transmission.
- Either all parameters are mapped based on old mapping or all parameters are mapped based on new mapping.

For each mapping of a parameter, the reception procedure is as follows:
- If STA_ID or any portion of AID is in the PHY header, identify STA_ID based on mapped AID and map the parameters back to actual parameters based on the mapping to continue the following operations like reordering.
- If STA_ID and any portion of AID is not in the PHY header, identify non-AP STA MAC address based on mapped MAC address and map the parameters back to actual parameters based on the mapping to continue the following operations like reordering.
- If AID is in any frame, i.e., Trigger frame or NDPA, identify reception based on mapped AID.

The transmission procedure during transient period is as follows:

The outgoing transmission maybe based on old mapping or new mapping and the operation for each mapping is described above.

The reception procedure during transient period is as follows:
If STA_ID or any portion of AID is in the PHY header, identify STA_ID based on old mapped AID or new mapped AID.

If an old mapped AID is encountered, map the parameters back to actual parameters based on the old mapping to continue the following operations like reordering.

If a new mapped AID is encountered, map the parameters back to actual parameters based on the new mapping to continue the following operations like reordering.

If STA_ID or any portion of AID is not in the PHY header, identify non-AP STA MAC address based on old mapped MAC address or new mapped MAC address.

If an old mapped MAC address is encountered, map the parameters back to actual parameters based on the old mapping to continue the following operations like reordering.

If a new mapped MAC address is encountered, map the parameters back to actual parameters based on the new mapping to continue the following operations like reordering.

If AID is in any frame, i.e., Trigger frame or NDPA, identify reception based on old mapped AID or new mapped AID.

The following discloses how to construct the mapping for AID, TID for either DL or UL, SN in each SN space, PN in each PN space, BA bitmap for different length acknowledges DL or UL data.

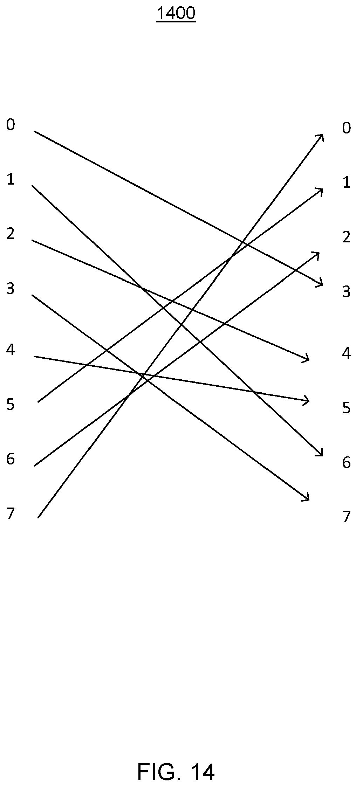

For TID, construct a random permutation between usable TID based on known input variables for calculation. The input variables can include the time for doing the change and some parameters that uniquely identify the peer. For example, the Fisher-Yates shuffle may be used, and the input variables may be used to generate a random number for shuffle algorithm. For example, for TID 0 to 7. FIG. 14 is a block diagram illustrating an example of a mapping based on a random permutation, according to some example embodiments of the present disclosure.

For SN or SSN, construct a random offset for each sequence number space based on known input variables for calculation. The input variables can include the time for doing the change and some parameters that uniquely identify the peer. The mapping is the actual SN or actual SSN plus the random offset mod the maximum number of sequence number space.

For a BA bitmap of different length. For each BA length (including 32, 64, 256, 512, 1024 if available) acknowledges DL data or for each BA length (including 32, 64, 256, 512, 1024 if available) acknowledges UL data, construct a random permutation with length equal to the BA length based on known input variables for calculation. The input variables can include the time for doing the change and some parameters that uniquely identify the peer. For example, the Fisher-Yates shuffle may be used, and the input variables may be used to generate a random number for shuffle algorithm.

### For PN:

Construct a random offset for each packet number space based on known input variables for calculation. The input variables can include the time for doing the change and some parameters that uniquely identify the peer. The mapping is the actual PN plus the random offset mod the maximum number of packet number space.

### For MAC address:

As one option, a random MAC address for non-AP STA is constructed based on known input variables for calculation.

The input variables can include the time for doing the change and some parameters that uniquely identify the peer.

As another option, the AP or AP MLD assigns the new MAC address for non-AP STA.

This eliminates the collision problem.

The newly assigned MAC address can be piggybacked in any management frame using an element.

The format for the element can be a list of LINK ID and corresponding MAC address.

### For AID:

AP or AP MLD assigns the new AID.

This eliminates the AID collision problem.

The newly assigned AID can be piggybacked in any management frame using and element as the next AID to be used.

The element can be AID element.

The element can be a newly designed element for 11bi.

Now additional requirement may be discussed for using old mapping and new mapping.

In a transmit opportunity (TXOP), all parameters should use old mapping or new mapping. This can be decided by the first individually addressed frame from the TXOP initiator to the TXOP responder or from the TXOP responder to the TXOP initiator whichever occurs first.

If the first frame uses old mapping for the first frame, then old mapping shall be used for the entire TXOP for all the parameters.

If the first frame uses new mapping, then new mapping shall be used for the entire TXOP for all the parameters.

In a management response frame to a management request frame:
If the management request frame uses old mapping, then the management response frame shall use old mapping.

If the management request frame uses new mapping, then the management response frame shall use new mapping.

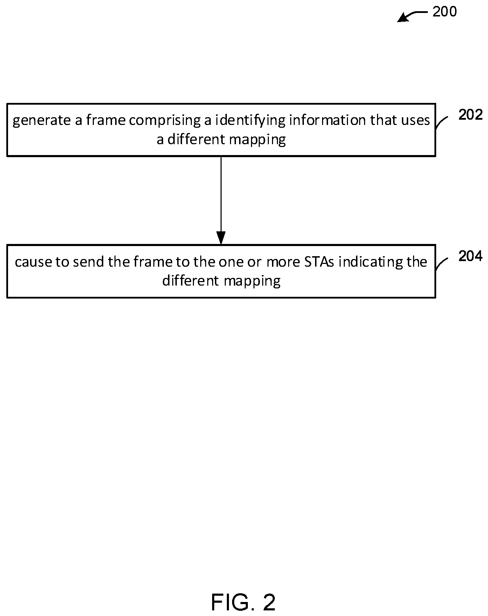

FIG. 2 illustrates a flow diagram of illustrative process 200 for a mapping mechanism system, in accordance with one or more example embodiments of the present disclosure.

At block 202, a device (e.g., the user device(s) 120 and/or the AP 102 of FIG. 1 and/or the mapping mechanism device 419 of FIG. 4) may generate a frame comprising an identifying information that uses a different mapping.

At block 204, the device may cause to send the frame to the one or more STAs indicating the different mapping.

It is understood that the above descriptions are for purposes of illustration and are not meant to be limiting.

FIG. 3 shows a functional diagram of an exemplary communication station 300, in accordance with one or more example embodiments of the present disclosure. In one embodiment, FIG. 3 illustrates a functional block diagram of a communication station that may be suitable for use as an AP 102 (FIG. 1) or a user device 120 (FIG. 1) in accordance with some embodiments. The communication station 300 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 300 may include communications circuitry 302 and a transceiver 310 for transmitting and receiving signals to and from other communication stations using one or more antennas 301. The communications circuitry 302 may include circuitry that can operate the physical layer (PHY) communications and/or medium access control (MAC) communications for controlling access to the wireless medium, and/or any other communications layers for transmitting and receiving signals. The communication station 300 may also include processing circuitry 306 and memory 308 arranged to perform the operations described herein. In some embodiments, the communications circuitry 302 and the processing circuitry 306 may be configured to perform operations detailed in the above figures, diagrams, and flows.

In accordance with some embodiments, the communications circuitry 302 may be arranged to contend for a wireless medium and configure frames or packets for communicating over the wireless medium. The communications circuitry 302 may be arranged to transmit and receive signals. The communications circuitry 302 may also include circuitry for modulation/demodulation, upconversion/downconversion, filtering, amplification, etc. In some embodiments, the processing circuitry 306 of the communication station 300 may include one or more processors. In other embodiments, two or more antennas 301 may be coupled to the communications circuitry 302 arranged for sending and receiving signals. The memory 308 may store information for configuring the processing circuitry 306 to perform operations for configuring and transmitting message frames and performing the various operations described herein. The memory 308 may include any type of memory, including non-transitory memory, for storing information in a form readable by a machine (e.g., a computer). For example, the memory 308 may include a computer-readable storage device, read-only memory (ROM), random-access memory (RAM), magnetic disk storage media, optical storage media, flash-memory devices and other storage devices and media.

In some embodiments, the communication station 300 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 300 may include one or more antennas 301. The antennas 301 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 300 may include one or more of a keyboard, a display, a non-volatile memory port, multiple antennas, a graphics processor, an application processor, speakers, and other mobile device elements. The display may be an LCD screen including a touch screen.

Although the communication station 300 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 300 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 300 may include one or more processors and may be configured with instructions stored on a computer-readable storage device.

FIG. 4 illustrates a block diagram of an example of a machine 400 or system upon which any one or more of the techniques (e.g., methodologies) discussed herein may be performed. In other embodiments, the machine 400 may operate as a standalone device or may be connected (e.g., networked) to other machines. In a networked deployment, the machine 400 may operate in the capacity of a server machine, a client machine, or both in server-client network environments. In an example, the machine 400 may act as a peer machine in peer-to-peer (P2P) (or other distributed) network environments. The machine 400 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 400 may include a hardware processor 402 (e.g., a central processing unit (CPU), a graphics processing unit (GPU), a hardware processor core, or any combination thereof), a main memory 404 and a static memory 406, some or all of which may communicate with each other via an interlink (e.g., bus) 408. The machine 400 may further include a power management device 432, a graphics display device 410, an alphanumeric input device 412 (e.g., a keyboard), and a user interface (UI) navigation device 414 (e.g., a mouse). In an example, the graphics display device 410, alphanumeric input device 412, and UI navigation device 414 may be a touch screen display. The machine 400 may additionally include a storage device (i.e., drive unit) 416, a signal generation device 418 (e.g., a speaker), a mapping mechanism device 419, a network interface device/transceiver 420 coupled to antenna(s) 430, and one or more sensors 428, such as a global positioning system (GPS) sensor, a compass, an accelerometer, or other sensor. The machine 400 may include an output controller 434, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 402 for generation and processing of the baseband signals and for controlling operations of the main memory 404, the storage device 416, and/or the mapping mechanism device 419. The baseband processor may be provided on a single radio card, a single chip, or an integrated circuit (IC).

The storage device 416 may include a machine readable medium 422 on which is stored one or more sets of data structures or instructions 424 (e.g., software) embodying or utilized by any one or more of the techniques or functions described herein. The instructions 424 may also reside, completely or at least partially, within the main memory 404, within the static memory 406, or within the hardware processor 402 during execution thereof by the machine 400. In an example, one or any combination of the hardware processor 402, the main memory 404, the static memory 406, or the storage device 416 may constitute machine-readable media.

The mapping mechanism device 419 may carry out or perform any of the operations and processes (e.g., process 200) described and shown above.

It is understood that the above are only a subset of what the mapping mechanism device 419 may be configured to perform and that other functions included throughout this disclosure may also be performed by the mapping mechanism device 419.

While the machine-readable medium 422 is illustrated as a single medium, the term "machine-readable medium" may include a single medium or multiple media (e.g., a centralized or distributed database, and/or associated caches and servers) configured to store the one or more instructions 424.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 400 and that cause the machine 400 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 424 may further be transmitted or received over a communications network 426 using a transmission medium via the network interface device/transceiver 420 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 420 may include one or more physical jacks (e.g., Ethernet, coaxial, or phone jacks) or one or more antennas to connect to the communications network 426. In an example, the network interface device/transceiver 420 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 400 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

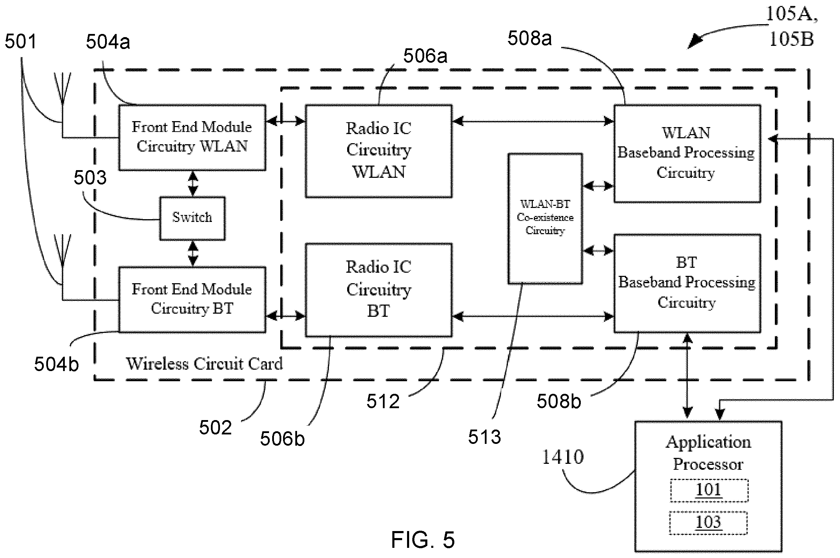

FIG. 5 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 504a-b, radio IC circuitry 506a-b and baseband processing circuitry 508a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 504a-b may include a WLAN or Wi-Fi FEM circuitry 504a and a Bluetooth (BT) FEM circuitry 504b. The WLAN FEM circuitry 504a may include a receive signal path comprising circuitry configured to operate on WLAN RF signals received from one or more antennas 501, to amplify the received signals and to provide the amplified versions of the received signals to the WLAN radio IC circuitry 506a for further processing. The BT FEM circuitry 504b may include a receive signal path which may include circuitry configured to operate on BT RF signals received from one or more antennas 501, to amplify the received signals and to provide the amplified versions of the received signals to the BT radio IC circuitry 506b for further processing. FEM circuitry 504a may also include a transmit signal path which may include circuitry configured to amplify WLAN signals provided by the radio IC circuitry 506a for wireless transmission by one or more of the antennas 501. In addition, FEM circuitry 504b may also include a transmit signal path which may include circuitry configured to amplify BT signals provided by the radio IC circuitry 506b for wireless transmission by the one or more antennas. In the embodiment of FIG. 5, although FEM 504a and FEM 504b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 506a-b as shown may include WLAN radio IC circuitry 506a and BT radio IC circuitry 506b. The WLAN radio IC circuitry 506a may include a receive signal path which may include circuitry to down-convert WLAN RF signals received from the FEM circuitry 504a and provide baseband signals to WLAN baseband processing circuitry 508a. BT radio IC circuitry 506b may in turn include a receive signal path which may include circuitry to down-convert BT RF signals received from the FEM circuitry 504b and provide baseband signals to BT baseband processing circuitry 508b. WLAN radio IC circuitry 506a may also include a transmit signal path which may include circuitry to up-convert WLAN baseband signals provided by the WLAN baseband processing circuitry 508a and provide WLAN RF output signals to the FEM circuitry 504a for subsequent wireless transmission by the one or more antennas 501. BT radio IC circuitry 506b may also include a transmit signal path which may include circuitry to up-convert BT baseband signals provided by the BT baseband processing circuitry 508b and provide BT RF output signals to the FEM circuitry 504b for subsequent wireless transmission by the one or more antennas 501. In the embodiment of FIG. 5, although radio IC circuitries 506a and 506b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 508a-b may include a WLAN baseband processing circuitry 508a and a BT baseband processing circuitry 508b. The WLAN baseband processing circuitry 508a may include a memory, such as, for example, a set of RAM arrays in a Fast Fourier Transform or Inverse Fast Fourier Transform block (not shown) of the WLAN baseband processing circuitry 508a. Each of the WLAN baseband circuitry 508a and the BT baseband circuitry 508b may further include one or more processors and control logic to process the signals received from the corresponding WLAN or BT receive signal path of the radio IC circuitry 506a-b, and to also generate corresponding WLAN or BT baseband signals for the transmit signal path of the radio IC circuitry 506a-b. Each of the baseband processing circuitries 508a and 508b may further include physical layer (PHY) and medium access control layer (MAC) circuitry, and may further interface with a device for generation and processing of the baseband signals and for controlling operations of the radio IC circuitry 506a-b.

Referring still to FIG. 5, according to the shown embodiment, WLAN-BT coexistence circuitry 513 may include logic providing an interface between the WLAN baseband circuitry 508a and the BT baseband circuitry 508b to enable use cases requiring WLAN and BT coexistence. In addition, a switch 503 may be provided between the WLAN FEM circuitry 504a and the BT FEM circuitry 504b to allow switching between the WLAN and BT radios according to application needs. In addition, although the antennas 501 are depicted as being respectively connected to the WLAN FEM circuitry 504a and the BT FEM circuitry 504b, embodiments include within their scope the sharing of one or more antennas as between the WLAN and BT FEMs, or the provision of more than one antenna connected to each of FEM 504a or 504b.

In some embodiments, the front-end module circuitry 504a-b, the radio IC circuitry 506a-b, and baseband processing circuitry 508a-b may be provided on a single radio card, such as wireless radio card 502. In some other embodiments, the one or more antennas 501, the FEM circuitry 504a-b and the radio IC circuitry 506a-b may be provided on a single radio card. In some other embodiments, the radio IC circuitry 506a-b and the baseband processing circuitry 508a-b may be provided on a single chip or integrated circuit (IC), such as IC 512.

In some embodiments, the wireless radio card 502 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

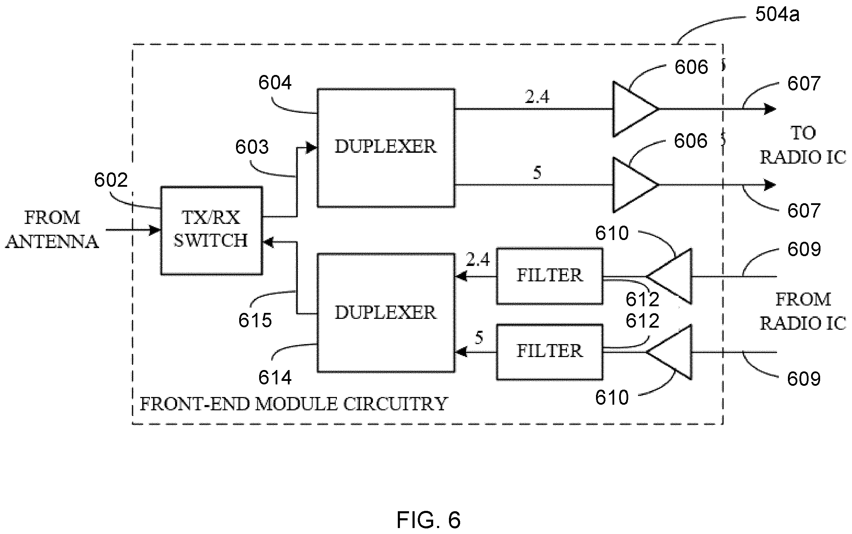

In some embodiments, as further shown in FIG. 6, the BT baseband circuitry 508b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 6 illustrates WLAN FEM circuitry 504a in accordance with some embodiments. Although the example of FIG. 6 is described in conjunction with the WLAN FEM circuitry 504a, the example of FIG. 6 may be described in conjunction with the example BT FEM circuitry 504b (FIG. 5), although other circuitry configurations may also be suitable.

In some embodiments, the FEM circuitry 504a may include a TX/RX switch 602 to switch between transmit mode and receive mode operation. The FEM circuitry 504a may include a receive signal path and a transmit signal path. The receive signal path of the FEM circuitry 504a may include a low-noise amplifier (LNA) 606 to amplify received RF signals 603 and provide the amplified received RF signals 607 as an output (e.g., to the radio IC circuitry 506a-b (FIG. 5)). The transmit signal path of the circuitry 504a may include a power amplifier (PA) to amplify input RF signals 609 (e.g., provided by the radio IC circuitry 506a-b), and one or more filters 612, such as band-pass filters (BPFs), low-pass filters (LPFs) or other types of filters, to generate RF signals 615 for subsequent transmission (e.g., by one or more of the antennas 501 (FIG. 5)) via an example duplexer 614.

In some dual-mode embodiments for Wi-Fi communication, the FEM circuitry 504a may be configured to operate in either the 2.4 GHz frequency spectrum or the 5 GHz frequency spectrum. In these embodiments, the receive signal path of the FEM circuitry 504a may include a receive signal path duplexer 604 to separate the signals from each spectrum as well as provide a separate LNA 606 for each spectrum as shown. In these embodiments, the transmit signal path of the FEM circuitry 504a may also include a power amplifier 610 and a filter 612, such as a BPF, an LPF or another type of filter for each frequency spectrum and a transmit signal path duplexer 604 to provide the signals of one of the different spectrums onto a single transmit path for subsequent transmission by the one or more of the antennas 501 (FIG. 5). In some embodiments, BT communications may utilize the 2.4 GHz signal paths and may utilize the same FEM circuitry 504a as the one used for WLAN communications.

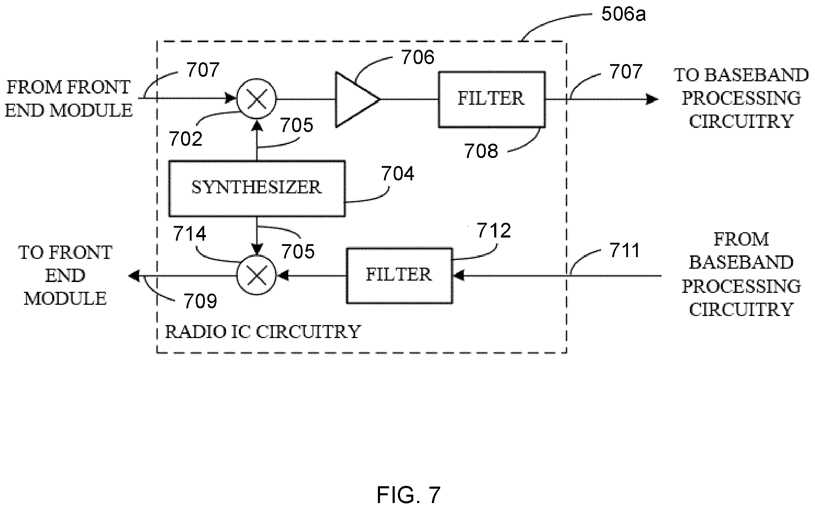

FIG. 7 illustrates radio IC circuitry 506a in accordance with some embodiments. The radio IC circuitry 506a is one example of circuitry that may be suitable for use as the WLAN or BT radio IC circuitry 506a/506b (FIG. 5), although other circuitry configurations may also be suitable. Alternatively, the example of FIG. 7 may be described in conjunction with the example BT radio IC circuitry 506b.

In some embodiments, the radio IC circuitry 506a may include a receive signal path and a transmit signal path. The receive signal path of the radio IC circuitry 506a may include at least mixer circuitry 702, such as, for example, down-conversion mixer circuitry, amplifier circuitry 706 and filter circuitry 708. The transmit signal path of the radio IC circuitry 506a may include at least filter circuitry 712 and mixer circuitry 714, such as, for example, up-conversion mixer circuitry. Radio IC circuitry 506a may also include synthesizer circuitry 704 for synthesizing a frequency 705 for use by the mixer circuitry 702 and the mixer circuitry 714. The mixer circuitry 702 and/or 714 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 7 illustrates only a simplified version of a radio IC circuitry, and may include, although not shown, embodiments where each of the depicted circuitries may include more than one component. For instance, mixer circuitry 714 may each include one or more mixers, and filter circuitries 708 and/or 712 may each include one or more filters, such as one or more BPFs and/or LPFs according to application needs. For example, when mixer circuitries are of the direct-conversion type, they may each include two or more mixers.

In some embodiments, mixer circuitry 702 may be configured to down-convert RF signals 607 received from the FEM circuitry 504a-b (FIG. 5) based on the synthesized frequency 705 provided by synthesizer circuitry 704. The amplifier circuitry 706 may be configured to amplify the down-converted signals and the filter circuitry 708 may include an LPF configured to remove unwanted signals from the down-converted signals to generate output baseband signals 707. Output baseband signals 707 may be provided to the baseband processing circuitry 508a-b (FIG. 5) for further processing. In some embodiments, the output baseband signals 707 may be zero-frequency baseband signals, although this is not a requirement. In some embodiments, mixer circuitry 702 may comprise passive mixers, although the scope of the embodiments is not limited in this respect.

In some embodiments, the mixer circuitry 714 may be configured to up-convert input baseband signals 711 based on the synthesized frequency 705 provided by the synthesizer circuitry 704 to generate RF output signals 609 for the FEM circuitry 504a-b. The baseband signals 711 may be provided by the baseband processing circuitry 508a-b and may be filtered by filter circuitry 712. The filter circuitry 712 may include an LPF or a BPF, although the scope of the embodiments is not limited in this respect.

In some embodiments, the mixer circuitry 702 and the mixer circuitry 714 may each include two or more mixers and may be arranged for quadrature down-conversion and/or up-conversion respectively with the help of synthesizer 704. In some embodiments, the mixer circuitry 702 and the mixer circuitry 714 may each include two or more mixers each configured for image rejection (e.g., Hartley image rejection). In some embodiments, the mixer circuitry 702 and the mixer circuitry 714 may be arranged for direct down-conversion and/or direct up-conversion, respectively. In some embodiments, the mixer circuitry 702 and the mixer circuitry 714 may be configured for super-heterodyne operation, although this is not a requirement.

Mixer circuitry 702 may comprise, according to one embodiment: quadrature passive mixers (e.g., for the in-phase (I) and quadrature phase (Q) paths). In such an embodiment, RF input signal 607 from FIG. 7 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 705 of synthesizer 704 (FIG. 7). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 607 (FIG. 6) may comprise a balanced signal, although the scope of the embodiments is not limited in this respect. The I and Q baseband output signals may be provided to low-noise amplifier, such as amplifier circuitry 706 (FIG. 7) or to filter circuitry 708 (FIG. 7).

In some embodiments, the output baseband signals 707 and the input baseband signals 711 may be analog baseband signals, although the scope of the embodiments is not limited in this respect. In some alternate embodiments, the output baseband signals 707 and the input baseband signals 711 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 704 may be a fractional-N synthesizer or a fractional N/N+1 synthesizer, although the scope of the embodiments is not limited in this respect as other types of frequency synthesizers may be suitable. For example, synthesizer circuitry 704 may be a delta-sigma synthesizer, a frequency multiplier, or a synthesizer comprising a phase-locked loop with a frequency divider. According to some embodiments, the synthesizer circuitry 704 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 704 may be provided by a voltage controlled oscillator (VCO), although that is not a requirement. A divider control input may further be provided by either the baseband processing circuitry 508a-b (FIG. 5) depending on the desired output frequency 705. In some embodiments, a divider control input (e.g., N) may be determined from a look-up table (e.g., within a Wi-Fi card) based on a channel number and a channel center frequency as determined or indicated by the example application processor 510. The application processor 510 may include, or otherwise be connected to, one of the example secure signal converter 101 or the example received signal converter 103 (e.g., depending on which device the example radio architecture is implemented in).

In some embodiments, synthesizer circuitry 704 may be configured to generate a carrier frequency as the output frequency 705, while in other embodiments, the output frequency 705 may be a fraction of the carrier frequency (e.g., one-half the carrier frequency, one-third the carrier frequency). In some embodiments, the output frequency 705 may be a LO frequency (fLO).

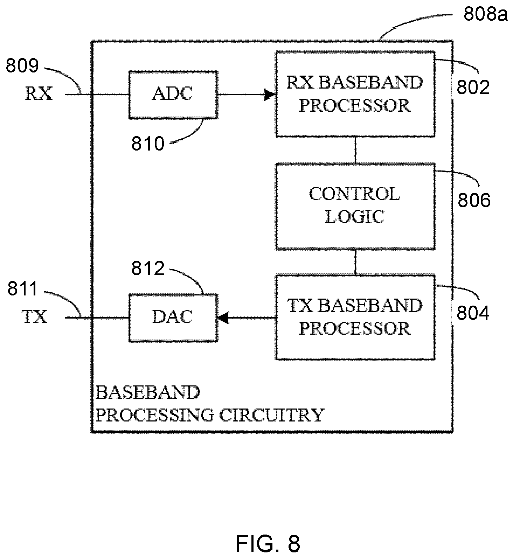

FIG. 8 illustrates a functional block diagram of baseband processing circuitry 508a in accordance with some embodiments. The baseband processing circuitry 508a is one example of circuitry that may be suitable for use as the baseband processing circuitry 508a (FIG. 5), although other circuitry configurations may also be suitable. Alternatively, the example of FIG. 7 may be used to implement the example BT baseband processing circuitry 508b of FIG. 5.

The baseband processing circuitry 508a may include a receive baseband processor (RX BBP) 802 for processing receive baseband signals 709 provided by the radio IC circuitry 506a-b (FIG. 5) and a transmit baseband processor (TX BBP) 804 for generating transmit baseband signals 711 for the radio IC circuitry 506a-b. The baseband processing circuitry 508a may also include control logic 806 for coordinating the operations of the baseband processing circuitry 508a.

In some embodiments (e.g., when analog baseband signals are exchanged between the baseband processing circuitry 508a-b and the radio IC circuitry 506a-b), the baseband processing circuitry 508a may include ADC 810 to convert analog baseband signals 809 received from the radio IC circuitry 506a-b to digital baseband signals for processing by the RX BBP 802. In these embodiments, the baseband processing circuitry 508a may also include DAC 812 to convert digital baseband signals from the TX BBP 804 to analog baseband signals 811.

In some embodiments that communicate OFDM signals or OFDMA signals, such as through baseband processor 508a, the transmit baseband processor 804 may be configured to generate OFDM or OFDMA signals as appropriate for transmission by performing an inverse fast Fourier transform (IFFT). The receive baseband processor 802 may be configured to process received OFDM signals or OFDMA signals by performing an FFT. In some embodiments, the receive baseband processor 802 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 5, in some embodiments, the antennas 501 (FIG. 5) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 501 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings.

## Claims

1. A device configured for operation in a communication network, the device comprising processing circuitry coupled to storage, the processing circuitry configured to:
determine a frame for transmission, the frame including a plurality of header parameters;
convert the plurality of header parameters to a corresponding plurality of over-the-air header parameters, wherein the converting comprises applying a reversible mapping between the plurality of header parameters and the plurality of over-the-air header parameters;
replace the plurality of header parameters with the plurality of over-the-air header parameters; and
cause to transmit the frame with the plurality of over-the-air header parameters,
wherein the reversible mapping is predetermined,
wherein, during a first period (1302), the reversible mapping is a first mapping and the plurality of over-the-air header parameters is a first plurality of over-the-air header parameters based on the first mapping,
wherein, during a second period (1306), the reversible mapping is a second mapping and the plurality of over-the-air header parameters is a second plurality of over-the-air header parameters based on the second mapping, and
wherein, during a transient period (1304), the reversible mapping is the first mapping and the plurality of over-the-air header parameters is the first plurality of over-the-air header parameters or the reversible mapping is the second mapping and the plurality of over-the-air header parameters is the second plurality of over-the-air header parameters,
wherein the second period (1306) is later than the first period (1302) and the transient period (1304) is between the first period (1302) and the second period (1306).

2. The device of claim 1,
wherein the transient period (1200, 1306) comprises a transmission transient period (1204) and a reception transient period (1202),
wherein a start time of the reception transient period is earlier than a start time of the transmission transient period, and
wherein an end time of the reception transient period is later than an end time of the transmission transient period.

3. The device of claim 2,
wherein the start time and the end time of the transmission transient period and the start time and the end time of the reception transient period are indicated by a non-client entity, and
wherein a periodicity of the transmission transient period and a periodicity of the reception transient period are indicated by the non-client entity.

4. The device of claim 3,
wherein the start time of the reception transient period is announced by the non-client entity during association or is indicated by a frame transmitted by the non-client entity after association, and/or
wherein the end time of the reception transient period is a predetermined amount of time announced by the non-client entity during association, and/or
wherein the start time of the transmission transient period is announced by the non-client entity during association, and/or
wherein the end time of the transmission transient period ends at a predetermined amount of time before the end of the reception transient period.

5. The device of any one of claims 1-4, wherein the processing circuitry is further configured to:
determine channel access for the frame based on the plurality of header parameters rather than the plurality of over-the-air header parameters.

6. The device of any one of claims 1-5, wherein the processing circuitry is further configured to:
encrypt based on the plurality of header parameters rather than the plurality of over-the-air header parameters.

7. The device of any one of claims 1-6, wherein during a TXOP, each frame of the TXOP uses a same reversible mapping.

8. The device of claim 7, wherein the reversible mapping is determined based on the first frame of the TXOP.

9. The device of any one of claims 1-8, wherein a management response frame uses a same reversible mapping as a management request frame.

10. A device configured for operation in a communication network, the device comprising processing circuitry coupled to storage, the processing circuitry configured to:
receive a frame, the frame including a plurality of over-the-air header parameters;
convert the plurality of over-the-air header parameters to a corresponding plurality of header parameters, wherein the converting comprises a reversible mapping between the plurality of over-the-air header parameters and the plurality of header parameters;
replace the plurality of over-the-air header parameters in the frame with the plurality of header parameters,
wherein the reversible mapping is predetermined,
wherein, during a first period (1302), the reversible mapping is a first mapping and the plurality of over-the-air header parameters is a first plurality of over-the-air header parameters based on the first mapping,
wherein, during a second period (1306), the reversible mapping is a second mapping and the plurality of over-the-air header parameters is a second plurality of over-the-air header parameters based on the second mapping, and
wherein, during a transient period (1304), the reversible mapping is the first mapping and the plurality of over-the-air header parameters is the first plurality of over-the-air header parameters or the reversible mapping is the second mapping and the plurality of over-the-air header parameters is the second plurality of over-the-air header parameters,
wherein the second period (1306) is later than the first period (1302) and the transient period (1304) is between the first period (1302) and the second period (1306), and
wherein the transient period (1200, 1304) comprises a transmission transient period (1204) and a reception transient period (1202),
wherein a start time of the reception transient period is earlier than a start time of the transmission transient period, and
wherein an end time of the reception transient period is later than an end time of the transmission transient period.

11. The device of claim 10, wherein the plurality of over-the-air header parameters includes an anchor identifier, wherein the processing circuitry is further configured to:
determine the reversible mapping based on the anchor identifier,
wherein when the anchor identifier matches a corresponding anchor identifier of the first mapping, the reversible mapping is determined to be the first mapping, and wherein when the anchor identifier matches a corresponding anchor identifier of the second mapping, the reversible mapping is determined to be the second mapping,
wherein, preferably, the anchor identifier is an STA_ID, AID, or MAC address.

12. The device of claim 10 or 11, wherein the processing circuitry is further configured to:
determine an order of the frame based on the plurality of header parameters rather than the plurality of over-the-air header parameters.

13. The device of any one of claims 1-12, wherein the plurality of header parameters include MAC addresses, traffic identifiers, TIDs, sequence numbers, SNs, block acknowledgement, BA, bitmaps, packet numbers, PNs, STA identifiers, STA_IDs, association identifier, AID, and wherein the plurality of over-the-air header parameters include corresponding MAC addresses, traffic identifiers, TIDs, sequence numbers, SNs, block acknowledgement, BA, bitmaps, packet numbers, PNs, STA identifiers, STA_IDs, association identifier, AID.

14. The device of any one of claims 1-13,
wherein the reversible mapping comprises a set of separate reversible mappings one for each parameter of the plurality of header parameters, and/or
wherein the reversible mapping includes a mapping for a plurality of TIDs, wherein the mapping for the plurality of TIDs comprises a random permutation of the plurality of TIDs and/or
wherein the reversible mapping includes a mapping for a plurality of SN spaces, wherein the mapping for a respective SN space of the plurality of SN spaces comprises a random offset added to each SN of the respective SN space, and/or
wherein the reversible mapping includes a mapping for a BA bitmap, wherein the BA bitmap comprises a plurality of BA lengths, wherein the mapping for the BA bitmap comprises a random permutation of the plurality of BA lengths, and/or
wherein the reversible mapping includes a mapping for a plurality of PN spaces, wherein the mapping for a respective PN space of the plurality of PN spaces comprises a random offset added to each PN of the respective PN space, and/or
wherein the reversible mapping includes a mapping for a MAC address of a client entity, wherein the mapping for the MAC address comprises a random MAC address or an over-the-air MAC address assigned by a non-client entity, and/or
wherein the reversible mapping includes a mapping for an AID of a client entity, wherein the mapping for the MAC address comprises an over-the-air AID assigned by a non-client entity.

15. A method of a device configured for operation in a communication network, method comprising:
determining a frame for transmission, the frame including a plurality of header parameters;
converting the plurality of header parameters to a corresponding plurality of over-the-air header parameters, wherein the converting comprises applying a set of reversible mappings between the plurality of header parameters and the plurality of over-the-air header parameters;
replacing the plurality of header parameters with the plurality of over-the-air header parameters; and
causing to transmit the frame with the plurality of over-the-air header parameters,
wherein the set of reversible mappings are predetermined, and
wherein, during a first period (1302), the reversible mapping is a first mapping and the plurality of over-the-air header parameters is a first plurality of over-the-air header parameters based on the first mapping,
wherein, during a second period (1306), the reversible mapping is a second mapping and the plurality of over-the-air header parameters is a second plurality of over-the-air header parameters based on the second mapping, and
wherein, during a transient period (1304), the reversible mapping is the first mapping and the plurality of over-the-air header parameters is the first plurality of over-the-air header parameters or the reversible mapping is the second mapping and the plurality of over-the-air header parameters is the second plurality of over-the-air header parameters,
wherein the second period (1306) is later than the first period (1302) and the transient period (1304) is between the first period (1302) and the second period (1306), and
wherein the transient period (1200, 1304) comprises a transmission transient period (1204) and a reception transient period (1202),
wherein a start time of the reception transient period is earlier than a start time of the transmission transient period, and
wherein an end time of the reception transient period is later than an end time of the transmission transient period.

## Patentansprüche

1. Vorrichtung, die zum Betrieb in einem Kommunikationsnetzwerk ausgelegt ist, wobei die Vorrichtung eine mit einem Speicher gekoppelte Verarbeitungsschaltungsanordnung umfasst, wobei die Verarbeitungsschaltungsanordnung zu Folgendem ausgelegt ist:
Bestimmen eines Frames zur Übertragung, wobei der Frame mehrere Header-Parameter beinhaltet;
Umwandeln der mehreren Header-Parameter in entsprechende mehrere Over-the-Air-Header-Parameter, wobei das Umwandeln Anwenden einer reversiblen Abbildung zwischen den mehreren Header-Parameter und den mehreren von Over-the-Air-Header-Parametern umfasst;
Ersetzen der mehreren Header-Parameter durch die mehreren Over-the-Air-Header-Parameter; und
Bewirken, dass der Frame mit den mehreren Over-the-Air-Header-Parametern übertragen wird,
wobei die reversible Abbildung vorbestimmt ist,
wobei während eines ersten Zeitraums (1302) die reversible Abbildung eine erste Abbildung ist und die mehreren Over-the-Air-Header-Parameter erste mehrere Over-the-Air-Header-Parametern basierend auf der ersten Abbildung sind,
wobei während eines zweiten Zeitraums (1306) die reversible Abbildung eine zweite Abbildung ist und die mehreren Over-the-Air-Header-Parameter zweite mehrere Over-the-Air-Header-Parametern basierend auf der zweiten Abbildung sind,
wobei während eines Übergangszeitraums (1304) die reversible Abbildung die erste Abbildung ist und die mehreren Over-the-Air-Header-Parameter die ersten mehreren Over-the-Air-Header-Parameter sind oder die reversible Abbildung die zweite Abbildung ist und die mehreren Over-the-Air-Header-Parameter die zweiten mehreren Over-the-Air-Header-Parameter sind,
wobei der zweite Zeitraum (1306) später als der erste Zeitraum (1302) ist und der Übergangszeitraum (1304) zwischen dem ersten Zeitraum (1302) und dem zweiten Zeitraum (1306) liegt.

2. Vorrichtung nach Anspruch 1,
wobei der Übergangszeitraum (1200, 1306) einen Übertragungsübergangszeitraum (1204) und einen Empfangsübergangszeitraum (1202) umfasst,
wobei eine Startzeit des Empfangsübergangszeitraums früher als eine Startzeit des Übertragungsübergangszeitraums ist und
wobei eine Endzeit des Empfangsübergangszeitraums später als eine Endzeit der Übertragungsübergangszeitraums ist.

3. Vorrichtung nach Anspruch 2,
wobei die Startzeit und die Endzeit des Übertragungsübergangszeitraums und die Startzeit und die Endzeit des Empfangsübergangszeitraums durch eine Nicht-Client-Entität angegeben werden und
wobei eine Periodizität des Übertragungszeitraums und eine Periodizität des Empfangszeitraums durch die Nicht-Client-Entität angegeben werden.

4. Vorrichtung nach Anspruch 3, wobei die Startzeit des Empfangsübergangszeitraums durch die Nicht-Client-Entität während Assoziation angekündigt wird oder durch einen durch die Nicht-Client-Entität nach Assoziation übertragenen Frame angegeben wird und/oder
wobei die Endzeit des Empfangsübergangszeitraums eine vorbestimmte Zeitdauer ist, die durch die Nicht-Client-Entität während Assoziation angekündigt wird, und/oder wobei die Startzeit des Übertragungszeitraums durch die Nicht-Client-Entität während Assoziation angekündigt wird und/oder
wobei die Endzeit des Übertragungsübergangszeitraums eine vorbestimmte Zeitdauer vor dem Ende des Empfangsübergangszeitraums endet.

5. Vorrichtung nach einem der Ansprüche 1 bis 4, wobei die Verarbeitungsschaltungsanordnung ferner zu Folgendem ausgelegt ist:
Bestimmen eines Kanalzugriffs für den Frame basierend auf den mehreren Header-Parametern anstelle der mehreren Over-the-Air-Header-Parameter.

6. Vorrichtung nach einem der Ansprüche 1 bis 5, wobei die Verarbeitungsschaltungsanordnung ferner zu Folgendem ausgelegt ist:
Verschlüsseln basierend auf den mehreren Header-Parametern anstelle der mehreren Over-the-Air-Header-Parameter.

7. Vorrichtung nach einem der Ansprüche 1-6, wobei während einer TXOP jeder Frame der TXOP eine gleiche reversible Abbildung verwendet.

8. Vorrichtung nach Anspruch 7, wobei die reversible Abbildung basierend auf dem ersten Frame der TXOP bestimmt wird.

9. Vorrichtung nach einem der Ansprüche 1-8, wobei ein Verwaltungsantwortframe eine gleiche reversible Abbildung wie ein Verwaltungsanforderungsframe verwendet.

10. Vorrichtung, die zum Betrieb in einem Kommunikationsnetzwerk ausgelegt ist, wobei die Vorrichtung eine mit einem Speicher gekoppelte Verarbeitungsschaltungsanordnung umfasst, wobei die Verarbeitungsschaltungsanordnung zu Folgendem ausgelegt ist:
Empfangen eines Frames, wobei der Frame mehrere Over-the-Air-Header-Parameter beinhaltet;
Umwandeln der mehreren Over-the-Air-Header-Parameter in entsprechende mehrere Header-Parameter, wobei das Umwandeln eine reversible Abbildung zwischen den mehreren Over-the-Air-Header-Parametern und den mehreren Header-Parametern umfasst;
Ersetzen der mehreren Over-the-Air-Parameter in dem Frame durch die mehreren Header-Parameter,
wobei die reversible Abbildung vorbestimmt ist,
wobei während eines ersten Zeitraums (1302) die reversible Abbildung eine erste Abbildung ist und die mehreren Over-the-Air-Header-Parameter erste mehrere Over-the-Air-Header-Parametern basierend auf der ersten Abbildung sind,
wobei während eines zweiten Zeitraums (1306) die reversible Abbildung eine zweite Abbildung ist und die mehreren Over-the-Air-Header-Parameter zweite mehrere Over-the-Air-Header-Parametern basierend auf der zweiten Abbildung sind,
wobei während eines Übergangszeitraums (1304) die reversible Abbildung die erste Abbildung ist und die mehreren Over-the-Air-Header-Parameter die ersten mehreren Over-the-Air-Header-Parameter sind oder die reversible Abbildung die zweite Abbildung ist und die mehreren Over-the-Air-Header-Parameter die zweiten mehreren Over-the-Air-Header-Parameter sind,
wobei der zweite Zeitraum (1306) später als der erste Zeitraum (1302) ist und der Übergangszeitraum (1304) zwischen dem ersten Zeitraum (1302) und dem zweiten Zeitraum (1306) liegt und
wobei der Übergangszeitraum (1200, 1304) einen Übertragungsübergangszeitraum (1204) und einen Empfangsübergangszeitraum (1202) umfasst,
wobei eine Startzeit des Empfangsübergangszeitraums früher als eine Startzeit des Übertragungsübergangszeitraums ist und
wobei eine Endzeit des Empfangsübergangszeitraums später als eine Endzeit der Übertragungsübergangszeitraums ist.

11. Vorrichtung nach Anspruch 10, wobei die mehreren Over-the-Air-Header-Parameter eine Ankerkennung beinhalten, wobei die Verarbeitungsschaltungsanordnung ferner zu Folgendem ausgelegt ist:
Bestimmen der reversiblen Abbildung basierend auf der Ankerkennung,
wobei, wenn die Ankerkennung mit einer entsprechenden Ankerkennung der ersten Abbildung übereinstimmt, die reversible Abbildung als die erste Abbildung bestimmt wird, und wobei, wenn die Ankerkennung mit einer entsprechenden Ankerkennung der zweiten Abbildung übereinstimmt, die reversible Abbildung als die zweite Abbildung bestimmt wird,
wobei vorzugsweise die Ankerkennung eine STA_ID-, AID- oder MAC-Adresse ist.

12. Vorrichtung nach Anspruch 10 oder 11, wobei die Verarbeitungsschaltungsanordnung ferner zu Folgendem ausgelegt ist:
Bestimmen einer Reihenfolge Frames basierend auf den mehreren Header-Parametern anstelle der mehreren Over-the-Air-Header-Parameter.

13. Vorrichtung nach einem der Ansprüche 1-12, wobei die mehreren Header-Parameter MAC-Adressen, Verkehrskennungen bzw. TIDs, Sequenznummern bzw. SNs, Blockbestätigungs- bzw. BA-Bitmaps, Paketnummern bzw. PNs, STA-Kennungen bzw. STA_IDs, Assoziationskennung bzw. AID beinhalten und wobei die mehreren Over-the-Air-Header-Parameter entsprechende MAC-Adressen, Verkehrskennungen bzw. TIDs, Sequenznummern bzw. SNs, Blockbestätigungs- bzw. BA-Bitmaps, Paketnummern bzw. PNs, STA-Kennungen bzw. STA_IDs, Assoziationskennung bzw. AID beinhalten.

14. Vorrichtung nach einem der Ansprüche 1-13,
wobei die reversible Abbildung einen Satz separater reversibler Abbildungen eine für jeden Parameter der mehreren Header-Parameter umfasst und/oder
wobei die reversible Abbildung eine Abbildung für mehrere TIDs beinhaltet, wobei die Abbildung für die mehreren TIDs eine zufällige Permutation der mehreren TIDs umfasst, und/oder
wobei die reversible Abbildung eine Abbildung für mehrere SN-Räume beinhaltet, wobei die Abbildung für einen jeweiligen SN-Raum der mehreren SN-Räume einen zu jeder SN des jeweiligen SN-Raums hinzugefügten zufälligen Versatz umfasst, und/oder
wobei die reversible Abbildung eine Abbildung für eine BA-Bitmap beinhaltet, wobei die BA-Bitmap mehrere BA-Längen umfasst, wobei die Abbildung für die BA-Bitmap eine zufällige Permutation der mehreren BA-Längen umfasst, und/oder
wobei die reversible Abbildung eine Abbildung für mehrere PN-Räume beinhaltet, wobei die Abbildung für einen jeweiligen PN-Raum der mehreren PN-Räume einen zu jeder PN des jeweiligen PN-Raums hinzugefügten zufälligen Versatz umfasst, und/oder
wobei die reversible Abbildung eine Abbildung für eine MAC-Adresse einer Client-Entität beinhaltet, wobei die Abbildung für die MAC-Adresse eine zufällige MAC-Adresse oder eine durch eine Nicht-Client-Entität zugewiesene Over-the-Air-MAC-Adresse umfasst, und/oder
wobei die reversible Abbildung eine Abbildung für eine AID einer Client-Entität beinhaltet, wobei die Abbildung für die MAC-Adresse eine oder eine durch eine Nicht-Client-Entität zugewiesene Over-the-Air-AID umfasst.

15. Verfahren einer Vorrichtung, die zum Betrieb in einem Kommunikationsnetzwerk ausgelegt ist, wobei das Verfahren Folgendes umfasst:
Bestimmen eines Frames zur Übertragung, wobei der Frame mehrere Header-Parameter beinhaltet;
Umwandeln der mehreren Header-Parameter in entsprechende mehrere Over-the-Air-Header-Parameter, wobei das Umwandeln Anwenden eines Satzes reversibler Abbildungen zwischen den mehreren Header-Parameter und den mehreren von Over-the-Air-Header-Parametern umfasst;
Ersetzen der mehreren Header-Parameter durch die mehreren Over-the-Air-Header-Parameter; und
Bewirken, dass der Frame mit den mehreren Over-the-Air-Header-Parametern übertragen wird,
wobei der Satz reversibler Abbildungen vorbestimmt ist und
wobei während eines ersten Zeitraums (1302) die reversible Abbildung eine erste Abbildung ist und die mehreren Over-the-Air-Header-Parameter erste mehrere Over-the-Air-Header-Parametern basierend auf der ersten Abbildung sind,
wobei während eines zweiten Zeitraums (1306) die reversible Abbildung eine zweite Abbildung ist und die mehreren Over-the-Air-Header-Parameter zweite mehrere Over-the-Air-Header-Parametern basierend auf der zweiten Abbildung sind,
wobei während eines Übergangszeitraums (1304) die reversible Abbildung die erste Abbildung ist und die mehreren Over-the-Air-Header-Parameter die ersten mehreren Over-the-Air-Header-Parameter sind oder die reversible Abbildung die zweite Abbildung ist und die mehreren Over-the-Air-Header-Parameter die zweiten mehreren Over-the-Air-Header-Parameter sind,
wobei der zweite Zeitraum (1306) später als der erste Zeitraum (1302) ist und der Übergangszeitraum (1304) zwischen dem ersten Zeitraum (1302) und dem zweiten Zeitraum (1306) liegt und
wobei der Übergangszeitraum (1200, 1304) einen Übertragungsübergangszeitraum (1204) und einen Empfangsübergangszeitraum (1202) umfasst,
wobei eine Startzeit des Empfangsübergangszeitraums früher als eine Startzeit des Übertragungsübergangszeitraums ist und
wobei eine Endzeit des Empfangsübergangszeitraums später als eine Endzeit der Übertragungsübergangszeitraums ist.

## Revendications

1. Dispositif configuré pour fonctionner dans un réseau de communication, le dispositif comprenant des circuits de traitement couplés à une mémoire, les circuits de traitement étant configurés pour :
déterminer une trame pour émission, la trame comportant une pluralité de paramètres d'en-tête ;
convertir la pluralité de paramètres d'en-tête en une pluralité correspondante de paramètres d'en-tête hertziens, la conversion comprenant l'application d'un mappage réversible entre la pluralité de paramètres d'entête et la pluralité de paramètres d'en-tête hertziens ;
remplacer la pluralité de paramètres d'en-tête par la pluralité de paramètres d'en-tête hertziens ; et
émettre la trame avec la pluralité de paramètres d'entête hertziens,
dans lequel le mappage réversible est prédéterminé,
dans lequel, pendant une première période (1302), le mappage réversible est un premier mappage et la pluralité de paramètres d'en-tête hertziens est une première pluralité de paramètres d'en-tête hertziens basés sur le premier mappage,
dans lequel, pendant une seconde période (1306), le mappage réversible est un second mappage et la pluralité de paramètres d'en-tête hertziens est une seconde pluralité de paramètres d'en-tête hertziens basés sur le second mappage, et
dans lequel, pendant une période transitoire (1304), le mappage réversible est le premier mappage et la pluralité de paramètres d'en-tête hertziens est la première pluralité de paramètres d'en-tête hertziens ou le mappage réversible est le second mappage et la pluralité de paramètres d'en-tête hertziens est la seconde pluralité de paramètres d'en-tête hertziens,
dans lequel la seconde période (1306) est postérieure à la première période (1302) et la période transitoire (1304) est entre la première période (1302) et la seconde période (1306).

2. Dispositif selon la revendication 1,
dans lequel la période transitoire (1200, 1306) comprend une période transitoire d'émission (1204) et une période transitoire de réception (1202),
dans lequel un temps de début de la période transitoire de réception est antérieur à un temps de début de la période transitoire d'émission, et
dans lequel un temps de fin de la période transitoire de réception est postérieur à un temps de fin de la période transitoire d'émission.

3. Dispositif selon la revendication 2,
dans lequel le temps de début et le temps de fin de la période transitoire d'émission et le temps de début et le temps de fin de la période transitoire de réception sont indiqués par une entité non-client, et
dans lequel une périodicité de la période transitoire d'émission et une périodicité de la période transitoire de réception sont indiquées par l'entité non-client.

4. Dispositif selon la revendication 3, dans lequel le temps de début de la période transitoire de réception est annoncé par l'entité non-client pendant l'association ou est indiqué par une trame émise par l'entité non-client après l'association, et/ou
dans lequel le temps de fin de la période transitoire de réception est une quantité de temps prédéterminée annoncée par l'entité non-client lors de l'association, et/ou
dans lequel le temps de début de la période transitoire d'émission est annoncé par l'entité non-cliente lors d'une association, et/ou
dans lequel le temps de fin de la période transitoire d'émission se termine à une quantité de temps prédéterminée avant la fin de la période transitoire de réception.

5. Dispositif selon l'une quelconque des revendications 1 à 4, dans lequel les circuits de traitement sont en outre configurés pour :
déterminer un accès au canal pour la trame sur la base de la pluralité de paramètres d'en-tête plutôt que de la pluralité de paramètres d'en-tête hertziens.

6. Dispositif selon l'une quelconque des revendications 1 à 5, dans lequel les circuits de traitement sont en outre configurés pour :
chiffrer sur la base de la pluralité de paramètres d'entête plutôt que de la pluralité de paramètres d'en-tête hertziens.

7. Dispositif selon l'une quelconque des revendications 1 à 6, dans lequel pendant une TXOP, chaque trame de la TXOP utilise un même mappage réversible.

8. Dispositif selon la revendication 7, dans lequel le mappage réversible est déterminé sur la base de la première trame de la TXOP.

9. Dispositif selon l'une quelconque des revendications 1 à 8, dans lequel une trame de réponse de gestion utilise un même mappage réversible qu'une trame de demande de gestion.

10. Dispositif configuré pour fonctionner dans un réseau de communication, le dispositif comprenant des circuits de traitement couplés à une mémoire, les circuits de traitement étant configurés pour :
recevoir une trame, la trame comportant plusieurs paramètres d'en-tête hertziens ;
convertir la pluralité de paramètres d'en-tête hertziens en une pluralité correspondante de paramètres d'en-tête, la conversion comprenant un mappage réversible entre la pluralité de paramètres d'en-tête hertziens et la pluralité de paramètres d'en-tête ;
remplacer la pluralité de paramètres d'en-tête hertziens dans la trame par la pluralité de paramètres d'en-tête, dans lequel le mappage réversible est prédéterminé,
dans lequel, pendant une première période (1302), le mappage réversible est un premier mappage et la pluralité de paramètres d'en-tête hertziens est une première pluralité de paramètres d'en-tête hertziens basés sur le premier mappage,
dans lequel, pendant une seconde période (1306), le mappage réversible est un second mappage et la pluralité de paramètres d'en-tête hertziens est une seconde pluralité de paramètres d'en-tête hertziens basés sur le second mappage, et
dans lequel, pendant une période transitoire (1304), le mappage réversible est le premier mappage et la pluralité de paramètres d'en-tête hertziens est la première pluralité de paramètres d'en-tête hertziens ou le mappage réversible est le second mappage et la pluralité de paramètres d'en-tête hertziens est la seconde pluralité de paramètres d'en-tête hertziens,
dans lequel la seconde période (1306) est postérieure à la première période (1302) et la période transitoire (1304) est entre la première période (1302) et la seconde période (1306), et
dans lequel la période transitoire (1200, 1304) comprend une période transitoire d'émission (1204) et une période transitoire de réception (1202),
dans lequel un temps de début de la période transitoire de réception est antérieur à un temps de début de la période transitoire d'émission, et
dans lequel un temps de fin de la période transitoire de réception est postérieur à un temps de fin de la période transitoire d'émission.

11. Dispositif selon la revendication 10, dans lequel la pluralité de paramètres d'en-tête hertziens comporte un identifiant d'ancrage, dans lequel les circuits de traitement sont en outre configurés pour :
déterminer le mappage réversible sur la base de l'identifiant d'ancrage,
dans lequel, lorsque l'identifiant d'ancrage correspond à un identifiant d'ancrage correspondant du premier mappage, le mappage réversible est déterminé comme étant le premier mappage, et dans lequel, lorsque l'identifiant d'ancrage correspond à un identifiant d'ancrage correspondant du second mappage, le mappage réversible est déterminé comme étant le second mappage,
dans lequel, de préférence, l'identifiant d'ancrage est une adresse STA_ID, AID ou MAC.

12. Dispositif selon la revendication 10 ou 11, dans lequel les circuits de traitement sont en outre configurés pour :
déterminer un ordre de la trame sur la base de la pluralité de paramètres d'en-tête plutôt que de la pluralité de paramètres d'en-tête hertziens.

13. Dispositif selon l'une quelconque des revendications 1 à 12, dans lequel la pluralité de paramètres d'en-tête comporte des adresses MAC, des identifiants de trafic, TID, des numéros de séquence, SN, un accusé de réception de bloc, BA, des bitmaps, des numéros de paquets, PN, des identifiants STA, STA_ID, un identifiant d'association, AID, et dans lequel la pluralité de paramètres d'en-tête hertziens comporte des adresses MAC, des identifiants de trafic, TID, des numéros de séquence, SNS, un accusé de réception de bloc, BA, des bitmaps, des numéros de paquets, PN, des identifiants STA, STA_ID, un identifiant d'association, AID, correspondants.

14. Dispositif selon l'une quelconque des revendications 1 à 13,
dans lequel le mappage réversible comprend un ensemble de mappages réversibles séparés, un pour chaque paramètre de la pluralité de paramètres d'en-tête, et/ou
dans lequel le mappage réversible comporte un mappage pour une pluralité de TID, dans lequel le mappage pour la pluralité de TID comprend une permutation aléatoire de la pluralité de TID et/ou
dans lequel le mappage réversible comporte un mappage pour une pluralité d'espaces SN, dans lequel le mappage pour un espace SN respectif de la pluralité d'espaces SN comprend un décalage aléatoire ajouté à chaque SN de l'espace SN respectif, et/ou
dans lequel le mappage réversible comporte un mappage pour un bitmap BA, dans lequel le bitmap BA comprend une pluralité de longueurs BA, dans lequel le mappage pour le bitmap BA comprend une permutation aléatoire de la pluralité de longueurs BA, et/ou
dans lequel le mappage réversible comporte un mappage pour une pluralité d'espaces PN, dans lequel le mappage pour un espace PN respectif de la pluralité d'espaces PN comprend un décalage aléatoire ajouté à chaque PN de l'espace PN respectif, et/ou
dans lequel le mappage réversible comporte un mappage pour une adresse MAC d'une entité client, dans lequel le mappage pour l'adresse MAC comprend une adresse MAC aléatoire ou une adresse MAC hertzienne attribuée par une entité non-client, et/ou
dans lequel le mappage réversible comporte un mappage pour un AID d'une entité client, dans lequel le mappage pour l'adresse MAC comprend un AID hertzien attribué par une entité non-client.

15. Procédé d'un dispositif configuré pour fonctionner dans un réseau de communication, le procédé comprenant :
la détermination d'une trame pour émission, la trame comportant une pluralité de paramètres d'en-tête ;
la conversion de la pluralité de paramètres d'en-tête en une pluralité correspondante de paramètres d'en-tête hertziens, la conversion comprenant l'application d'un ensemble de mappages réversibles entre la pluralité de paramètres d'en-tête et la pluralité de paramètres d'entête hertziens ;
le remplacement de la pluralité de paramètres d'en-tête par la pluralité de paramètres d'en-tête hertziens ; et
l'émission de la trame avec la pluralité de paramètres d'en-tête hertziens,
dans lequel l'ensemble de mappages réversibles est prédéterminé, et
dans lequel, pendant une première période (1302), le mappage réversible est un premier mappage et la pluralité de paramètres d'en-tête hertziens est une première pluralité de paramètres d'en-tête hertziens basés sur le premier mappage,
dans lequel, pendant une seconde période (1306), le mappage réversible est un second mappage et la pluralité de paramètres d'en-tête hertziens est une seconde pluralité de paramètres d'en-tête hertziens basés sur le second mappage, et
dans lequel, pendant une période transitoire (1304), le mappage réversible est le premier mappage et la pluralité de paramètres d'en-tête hertziens est la première pluralité de paramètres d'en-tête hertziens ou le mappage réversible est le second mappage et la pluralité de paramètres d'en-tête hertziens est la seconde pluralité de paramètres d'en-tête hertziens,
dans lequel la seconde période (1306) est postérieure à la première période (1302) et la période transitoire (1304) est entre la première période (1302) et la seconde période (1306), et
dans lequel la période transitoire (1200, 1304) comprend une période transitoire d'émission (1204) et une période transitoire de réception (1202),
dans lequel un temps de début de la période transitoire de réception est antérieur à un temps de début de la période transitoire d'émission, et
dans lequel un temps de fin de la période transitoire de réception est postérieur à un temps de fin de la période transitoire d'émission.
